# EUROPÄISCHE PATENTANMELDUNG

(11) **EP 1 473 806 A2**
(43) Veröffentlichungstag der Anmeldung: **03.11.2004**
(21) Anmeldenummer: 04102329.2
(22) Anmeldetag: 16.12.2003
(51) Int. Cl.: H01R 13/74

(54) **Steckvorrichtungselement mit Montagegewinde**

(30) Priorität: 17.01.2003 DE 10301879
(62) Teilanmeldung aus: 03028863.3
(71) Anmelder: Aloys Mennekes Anlagengesellschaft mbH & Co. KG, 57399 Kirchhundem (DE)
(72) Erfinder: Lazzaro, Volker, 57399, Kirchhundem (DE); Eicher, Helmut, 57482, Wenden (DE)
(74) Vertreter: Beckmann, Jürgen

(57) **Zusammenfassung**

Die Erfindung betrifft ein Steckvorrichtungssystem mit einer Montageplatte (10), welche Ausnehmungen zur Aufnahme von Steckvorrichtungselementen (20, 20') aufweist. Die Steckvorrichtungselemente besitzen Außengewinde, die mit korrespondierenden Gegengewinden an der Montage platte (10) zusammenwirken. Durch Gewinde mit Unterbrechungen und/oder durch mehrgängige Gewinde wird dabei die Einbaulage der Steckvorrichtungselemente (20, 20') nach weniger als einer Vollumdrehung erreicht. Vorzugsweise werden die Steckvorrichtungselemente (20, 20') gleichzeitig gegen Lösen gesichert sowie gegenüber der Montageplatte (10) abgedichtet.

## Beschreibung

Die Erfindung betrifft ein Steckvorrichtungselement mit einem Montagegewinde zur Verbindung mit einem anderen Bauteil. Ferner betrifft sie ein Steckvorrichtungssystem enthaltend mindestens ein Steckvorrichtungselement mit einem Montagegewinde sowie eine Montageplatte mit mindestens einer Ausnehmung für das Steckvorrichtungselement.

Steckvorrichtungen dienen dazu, eine leicht herzustellende sowie zu trennende Verbindung zwischen elektrischen Leitern bereitzustellen. Sie bestehen aus Steckern mit metallischen Kontaktstiften sowie Dosen (auch Buchsen genannt) mit metallischen Kontaktbuchsen, in welche die Kontaktstifte eingesteckt werden können. Aus dem Stand der Technik sind diesbezüglich Stecker und Dosen (nachfolgend allgemein als "Steckvorrichtungselemente" bezeichnet) mit einem Montagegewinde bekannt, auf das ein Abdeckgehäuse mit einer Kabeldurchführung aufgeschraubt werden kann.

Des Weiteren ist es aus der DE 198 39 342 A1 bekannt, auf ein mehrgängiges, durch die Öffnung einer Montagewand geführtes Montagegewinde eines Steckvorrichtungselementes eine Überwurfmutter aufzuschrauben, um die Montagewand einzuklemmen und das Steckvorrichtungselement hierdruch an der Wand zu fixieren.

Vor diesem Hintergrund war es Aufgabe der vorliegenden Erfindung, eine leichtere und schnellere Montage eines Steckvorrichtungselementes mit einem Montagegewinde insbesondere unter beengten Platzverhältnissen zu ermöglichen.

Diese Aufgabe wird durch ein Steckvorrichtungselement mit den Merkmalen des Anspruchs 1 sowie durch ein Steckvorrichtungssystem mit den Merkmalen des Anspruchs 2 gelöst. Vorteilhafte Ausgestaltungen sind in den Unteransprüchen enthalten.

Das erfindungsgemäße Steckvorrichtungselement weist ein Montagegewinde zur Verbindung mit einem anderen Bauteil wie beispielsweise einem Abdeckgehäuse oder einer Montageplatte auf. Das Montagegewinde kann sowohl ein Innengewinde als auch vorzugsweise ein Außengewinde sein. Das Montagegewinde beginnt mit einem nicht vollständig (d.h. um weniger als 360°) umlaufenden Abschnitt, der durch eine Unterbrechung vom nachfolgenden Abschnitt des Montagegewindes getrennt ist.

Ein derartiges Montagegewinde kann mit einem korrespondierend bzw. komplementär ausgebildeten Gegengewinde in einer Schnellmontage durch weniger als eine Vollumdrehung von 360° in eine Verbindungsstellung zusammengeschraubt werden, wobei trotz der unvollständigen Umdrehung ein über den Umfang gleichmäßiger Kontakt mit ausgewogener Kraftverteilung erzielt werden kann. Letzteres ist z.B. für eine ordnungsgemäße Verpressung einer elastischen Dichtung zwischen dem Steckvorrichtungselement und dem weiteren Bauteil erforderlich. Durch die kurze Umdrehung um weniger als 360° kann das Steckvorrichtungselement auch unter beengten Platzverhältnissen montiert werden, bei denen keine Volldrehung für ein Einschrauben möglich ist. Hierdurch wird insbesondere das Einschrauben mehrerer eng benachbarter Steckvorrichtungselemente in die Ausnehmungen einer Montageplatte ermöglicht, ohne dass weitere Fixierungsmittel wie etwa eine von der Rückseite aufzuschraubende Überwurfmutter erforderlich wären.

Die Verwendung des Montagegewindes am Steckvorrichtungselement hat den weiteren Vorteil, dass dieses auch in herkömmlicher Weise mit einem "normalen" Gewinde zusammengeschraubt werden kann. Daher kann das Steckvorrichtungselement ohne konstruktive Änderung zum Beispiel je nach Bedarf mit einem herkömmlichen Abdeckgehäuse verbunden werden, bei welchem mehrere Umdrehungen möglich beziehungsweise erforderlich sind, oder mit einer Montageplatte, bei welcher aus Platzgründen für das Einschrauben weniger als eine Vollumdrehung zur Verfügung steht.

Gemäß einer bevorzugten Weiterbildung des Steckvorrichtungselementes weist das Montagegewinde weitere Unterbrechungen auf, die mit der ersten, im Anschluss an den ersten Gewindeabschnitt liegenden Unterbrechung in axialer Richtung fluchten. In diesem Falle kann das Montagegewinde mit einem korrespondierenden Gegengewinde zunächst über ein oder mehrere Gewindegänge hinweg zusammengesteckt werden, bevor die Verschrau bung der Gewinde beginnt. Dies hat den Vorteil, dass mehrere Gewindegänge gleichzeitig zum Halt beitragen und dass gegebenenfalls unterschiedlich dicke Zwischenbauteile zwischen dem Steckvorrichtungselement und dem damit verbundenen weiteren Bauteil untergebracht werden können.

Weitere Erläuterungen zur Funktion des Montagegewindes mit Unterbrechungen sind in der Figurenbeschreibung zu finden.

Die Erfindung betrifft ferner ein Steckvorrichtungssystem enthaltend mindestens ein Steckvorrichtungselement mit einem Montagegewinde sowie eine Montageplatte mit mindestens einer Ausnehmung für das Steckvorrichtungselement. Der Begriff der "Montageplatte" ist dabei in einem weiten Sinne zu verstehen und umfasst jedes Bauelement, welches in einem Bereich um den Anbringungsort eines Steckvorrichtungselementes herum im Wesentlichen eben ist. In diesem Sinne kann eine Montageplatte z.B. die mit Ausnehmungen versehene Wand eines Gerätegehäuses sein. Vorzugsweise ist die Montageplatte insgesamt eben und zum Beispiel rechteckig geformt. Das Steckvorrichtungssystem ist dadurch gekennzeichnet, dass
- die Ausnehmung in der Montageplatte ein zum Montagegewinde des Steckvorrichtungselementes korrespondierendes Gegengewinde aufweist, so dass das Steckvorrichtungselement unmittelbar an der Montageplatte festgeschraubt werden kann;
- das Montagegewinde am Steckvorrichtungselement und das Gegengewinde an der Montageplatte durch weniger als eine Vollumdrehung in eine Verbindungsstellung verschraubt werden können, so dass einerseits eine Schnellmontage sowie andererseits eine Anwendung unter beengten Platzverhältnissen möglich ist;
- in der Verbindungsstellung von Steckvorrichtungselement und Montageplatte der maximale Winkel, über welchen kein Kontakt zwischen Montagegewinde und Gegengewinde besteht, weniger als der an einer Vollumdrehung fehlende Winkel beträgt.

Das erfindungsgemäße Steckvorrichtungssystem hat den Vorteil, dass eine Schnellmontage von Steckvorrichtungselementen durch einfaches Einschrauben in die Ausnehmungen der Montageplatte möglich ist. Dabei können mehrere Steckvorrichtungselemente auch dann in üblicher Weise dicht nebeneinander auf der Montageplatte angeordnet werden, wenn aufgrund überstehender Ansätze der Steckvorrichtungselemente keine Vollumdrehung möglich ist.

Wenn zwei herkömmliche Gewinde um weniger als eine Vollumdrehung miteinander verschraubt werden, liegen sie nur auf einer dem Drehwinkel entsprechenden Länge von 360°-α (mit 0 < α < 360°) aneinander an, während über den durchgehenden Restwinkel α hinweg kein Kontakt zwischen den verschraubten Teilen besteht. Dies führt zu einer ungleichmäßigen Verteilung der Kräfte und daher zu einer schlechten mechanischen Kopplung der Bauteile. Eine derartige Verbindung zwischen einem Steckvorrichtungselement und einem anderen Bauteil wird daher inakzeptabel, wenn der Restwinkel α eine bestimmte Größe (typischerweise 30°) überschreitet. In diesem Falle ist z.B. auch die gleichmäßige Verpressung von Dichtungsringen nicht mehr gewährleistet. Derartige Probleme werden bei dem erfindungsgemäßen Steckvorrichtungssystem vermieden, da hierbei das Montagegewinde und das Gegengewinde so ausgebildet sind, dass der Winkelbereich, über den kein Kontakt zwischen dem Steckvorrichtungselement und seinem Gegenstück besteht, kleiner als der an einer Vollumdrehung fehlende Restwinkel α ist. Selbst wenn daher der Restwinkel α eine erhebliche Größe von zum Beispiel 120° aufweist, kann auf diese Weise eine gute Bauteilverbindung mit gleichmäßiger Kräfteverteilung gewährleistet werden.

Ein Steckvorrichtungssystem mit den beschriebenen Eigenschaften kann auf verschiedene Weise realisiert werden. Gemäß einer ersten Ausführungsform ist das Steckvorrichtungselement in der oben erläuterten Weise ausgebildet, d.h. sein Montagegewinde beginnt mit einem nicht vollständig umlaufenden Abschnitt, der durch eine Unterbrechung vom nachfolgenden Abschnitt des Montagegewindes getrennt ist. Das korrespondierende Gegengewinde weist ebenfalls nach einem ersten Abschnitt eine Unterbrechung auf, wobei die Dimensionierung der Gewinde so abgestimmt ist, dass der erste Abschnitt des einen Gewindes jeweils durch die Unterbrechung des anderen Gewindes geführt werden kann. Für eine detailliertere Erläuterung des Zusammenwirkens derartiger Gewinde sei auf die Figurenbeschreibung verwiesen.

Die gewünschten Verschraubungseigenschaften werden ferner durch ein Montagegewinde und eine Gegengewinde erreicht, welche mehrgängig ausgebildet sind. Bei mehrgängigen Gewinden verläuft definitionsgemäß mehr als eine Gewindelinie schraubenförmig um den Gewindeschaft. Durch die Mehrgängigkeit wird eine große axiale Steigung jeder einzelnen Gewindelinie erreicht, so dass schon durch eine kurze Umdrehung um 360°-α ein großer axialer Weg zurückgelegt werden kann, der zum Beispiel zum Verpressen einer Dichtung ausreicht. Gleichzeitig wird durch die versetzt zueinander beginnenden einzelnen Gewindelinien erreicht, dass in der Verbindungsstellung die jeweiligen Winkelbereiche von 360°-α, über welche die Gewindelinien aneinander anliegen, ebenfalls zueinander versetzt sind. Daher ist der Winkelbereich, über welchen kein Kontakt zwischen den miteinander verschraubten Teilen besteht, in jedem Falle kleiner als α. Wenn der Winkelversatz zwischen zwei benachbarten Gewindelinien kleiner ist als der Einschraubwinkel 360°-α, ist sogar sichergestellt, dass über den gesamten Umfangsbereich von 360° immer mindestens eine Gewindelinie von Montagegewinde und Gegengewinde zueinander in Kontakt stehen.

Optional sind die Ausnehmungen der Montageplatte von einem Kragen umgeben, wobei in dem Kragen das korrespondierende Gegengewinde ausgebildet ist. Der Kragen sorgt für eine ausreichende Höhe zur Aufnahme des Montage gewindes und kann nach einer oder nach beiden Seiten der Montageplatte überstehen. Falls der Kragen hoch steht, wird ferner für einen Abstand zwischen der Oberfläche der Montageplatte und dem einzuschraubenden Steckvorrichtungselement gesorgt, welcher Kollisionen mit eventuellen Vorsprüngen an der Montageplatte verhindert.

Gemäß einer Weiterbildung des Steckvorrichtungssystems weist dieses Verriegelungsmittel auf, durch welche die Verbindungsstellung gegen eine Verdrehung blockiert wird. Durch die Verriegelungsmittel kann somit eine eindeutige Endposition der Verschraubung definiert und gegen ein unbeabsichtigtes Lösen gesichert werden. Für die Ausgestaltung der Verriegelungsmittel stehen dem Fachmann dabei verschiedene Möglichkeiten zur Verfügung. Insbesondere können die Verriegelungsmittel als ein radial und/oder axial federnd überstehender Vorsprung ausgebildet sein, welcher in eine korrespondierende Ausnehmung am anderen Teil einrastet. Je nach Anwendungsfall kann das Verriegelungsmittel dabei so ausgestaltet sein, dass es leicht von Hand, nur mit einem Werkzeug oder nur unter Zerstörung entriegelbar ist.

Vorzugsweise ist entlang der Ausnehmung der Montageplatte ein unverlierbares Dichtungselement angeordnet, welches nach Erreichen der Einbaulage des Steckvorrichtungselementes dessen Verbindung zur Montageplatte wasserdicht schließt. Das Dichtungselement kann z.B. ein O-Ring aus einem elastischen Material sein, der in einer Nut am Kragen der Montageplatte angeordnet oder vorzugsweise dort integral angeformt ist.

Im Folgenden wird die Erfindung mit Hilfe der Figuren beispielhaft erläutert. Es zeigt:
- Fig. 1: eine perspektivische Aufsicht einer Montageplatte mit zwei Ausnehmungen für Steckvorrichtungselemente;
- Fig. 2: eine perspektivische Unteransicht eines Steckvorrichtungselementes mit einem Montagegewinde;
- Fig. 3: eine perspektivische Aufsicht auf eine Montageplatte mit einem Steckvorrichtungselement in Einbaustellung und einem weiteren Steckvorrichtungselement zu Beginn des Einschraubens;
- Fig. 4: eine perspektivische Explosionsdarstellung des in Einbaustellung überführten Steckvorrichtungselementes von Figur 3 von unten;
- Fig. 5: eine schematische Darstellung eines abgewickelten Montagegewindes 120 und eines hierzu korrespondierenden Gegengewindes 110.

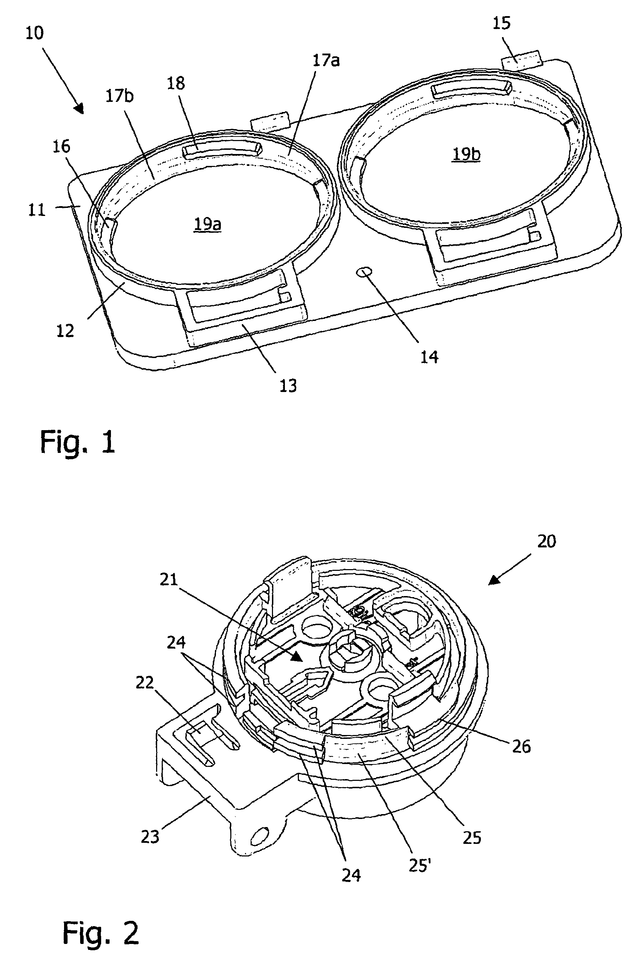

In Figur 1 ist eine perspektivische Ansicht auf die Oberseite einer Montageplatte 10 aus Kunststoff dargestellt, welche zur Schnellmontage zweier Steckvorrichtungselemente eingerichtet ist. Die Montageplatte 10 weist hierzu einen flachen, in etwa rechteckigen Trägerkörper 11 mit zwei kreisförmigen Ausnehmungen 19a, 19b auf. Die Ausnehmungen 19a, 19b sind jeweils von einem an der Außenseite der Montageplatte 10 nach oben abstehenden Kragen 12 umgeben, welcher angesichts der verhältnismäßig dünnen Montageplatte 10 für eine ausreichende Höhe zur Aufnahme des Gegen gewindes sowie für einen Abstand von der Ebene des Trägerkörpers 11 sorgt.

An der Innenfläche der Kragen 12 ist jeweils ein (Gegen-)Gewinde mit einem einzigen unterbrochenen und teilweise höhenversetzten Gewindegang ausgebildet, der durch ein einfaches Zweibacken-Werkzeug geformt werden kann. Dieser einzige Gewindegang besteht aus einem ersten Abschnitt 18, welcher sich über einen kleinen Winkelbereich von typischerweise 10° bis 30° erstreckt. Im Anschluss an den ersten Abschnitt 18 ist das Gewinde durch eine Unterbrechung beziehungsweise ein Fehlstück 17a unterbrochen. Das Fehlstück 17a erstreckt sich ebenfalls über einen verhältnismäßig kleinen Winkelbereich von typischerweise 10° bis 30°. Im Anschluss an die Unterbrechung 17a folgt ein zweiter, längerer Abschnitt 16 des Gewindes, welcher sich über einen Bereich von typischerweise 220° ± 40° erstreckt. Zwischen dem Ende des zweiten Gewindeabschnittes 16 und dem Beginn des ersten Gewindeabschnittes 18 liegt wiederum eine Unterbrechung 17b ohne jegliches Gewi nde.

Wie in Figur 1 ferner zu erkennen ist, ist der Kragen 12 an einer Längsseite der Montageplatte 10 durch einen rechtwinkligen Rahmen 13 erweitert, welcher als Sockel für die Klappdeckelanbindung 23 (Figur 2) eines Steckvorrichtungselementes 20 dient.

In Figur 2 ist die Rück- bzw. Unterseite eines Steckvorrichtungselementes 20 dargestellt, welches mit der in Figur 1 gezeigten Montageplatte verbunden werden kann. Das im Wesentlichen zylindrische Steckvorrichtungselement 20 weist einen - vorliegend nicht näher interessierenden - Einsatz 21 mit elektrischen Anschlussteilen auf, welcher hülsenförmig von einem Flansch mit einem Außengewinde umgeben ist. Das Gewinde entspricht grundsätzlich einem bei bekannten Steckvorrichtungselementen vorgesehenen Außengewinde (zum Beispiel Serie StarTOP 16A/3p von Mennekes Elektrotechnik, Kirchhundem), so dass es ein Zusammenschrauben mit einem zugehörigen Abdeckgehäuse in bekannter Weise erlaubt.

Um darüber hinaus eine Schnellmontage in einer Montageplatte gemäß Figur 1 zu ermöglichen, ist das Gewinde nach einem ersten Abschnitt 26 durch ein Fehlstück 25 unterbrochen, bevor es durch einen weiteren Abschnitt 24 fortgesetzt wird. Der weitere Abschnitt 24 ist dabei durch ein zweites Fehlstück im Bereich einer Klappdeckelanbindung 23 unterbrochen und in zwei Teile unterteilt. Diese optionale Unterbrechung hat vorrangig den Zweck, einen Schutzleitereinbau gemäß französischen Standard zu ermöglichen. Der Winkelbereich, über den sich das erste Fehlstück 25 erstreckt, entspricht mindestens der Winkelerstreckung des ersten Abschnittes 18 des Gegengewindes an der Montageplatte 10 von Figur 1. Schließlich ist der Gewindeabschnitt 24 im zweiten Umlauf noch einmal durch ein weiteres Fehlstück 25' unterbrochen, welches gleich lang wie das erste Fehlstück 25 ist und axial mit diesem fluchtet.

Des Weiteren ist in Figur 2 an der Unterseite der Klappdeckelanbindung 23, welche der Anbringung eines Klappdeckels (nicht dargestellt) dient, ein vorstehender Federhaken 22 zu erkennen. Beim Einschrauben des Steckvorrichtungselementes 20 in eine Ausnehmung 19a, 19b der Montageplatte 10 von Figur 1 rastet der Federhaken 22 bei Erreichen der Verbindungsstellung (Einbaulage) im Inneren des Sockels 13 der Klappdeckelanbindung ein. Durch diese Rastverbindung wird ein ungewolltes Zurückdrehen verhindert und somit eine Demontagesicherung erreicht. Vorzugsweise ist der Sockel 13 der Klappdeckelanbindung und/oder die Klappdeckelanbindung 23 mit einem Seitenschlitz versehen, durch welchen bei Bedarf eine Schraubenzieherklinge zur Entriegelung des Federhakens 22 eingesteckt werden kann.

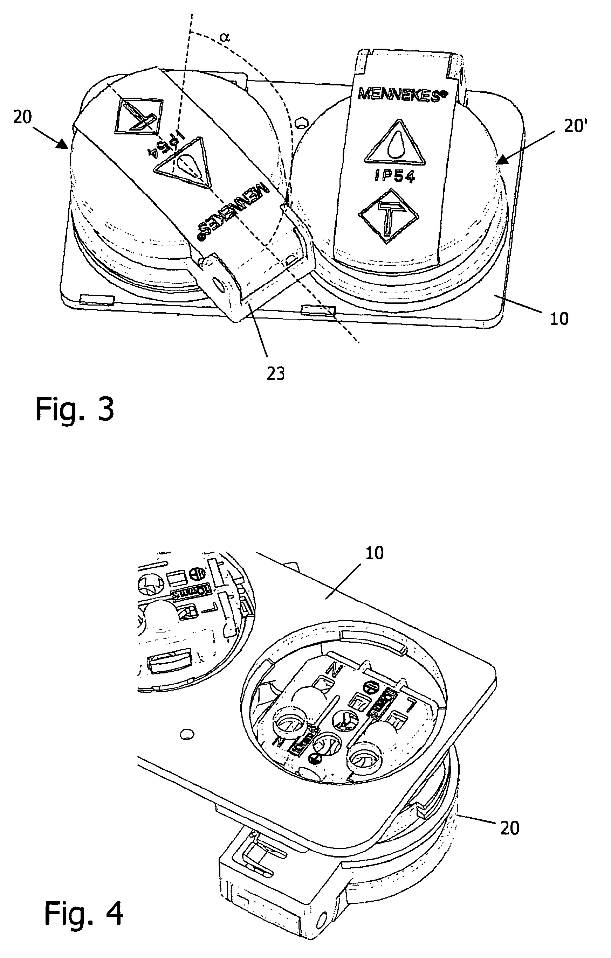

Figur 3 zeigt eine Montageplatte 10 mit einer fertig eingesetzten Steckvorrichtungsdose 20' in Einbaulage sowie einer zweiten Steckvorrichtungsdose 20, welche bereits in die zugehörige Ausnehmung eingesteckt, jedoch noch nicht in die Endposition geschraubt ist. Durch den Anschlag der Klappdeckel anbindung 23 an der bereits montierten Dose 20' kann die korrekte Ausrichtung der zweiten Dose 20 beim Einstecken quasi blind gefunden werden. Aufgrund des Anschlags der Klappdeckelanbindung 23 an der Dose 20' ist es nicht möglich, die zweite Dose 20 durch ein oder mehrere Vollumdrehungen an der Montageplatte 10 festzuschrauben.

Die Fixierung der zweiten Dose 20 erfolgt durch eine Drehung in Richtung des Pfeils, wobei ein Winkel von (360° - α) zurückgelegt wird. Der an einer Vollumdrehung fehlende Winkel α beträgt ca. 120°. Während des Einschraubens wird ein Hub von typischerweise 2.5 mm zurückgelegt, der ca. 45° vor Ende der Drehung zu einem ansteigenden Drehmoment führt, da eine um etwa 0.5 mm erhabene Ringdichtung in der Montageplatte 10 (nicht dargestellt) niedergedrückt werden muss. Durch die vorspringende Klappdeckelanbindung 23 ist während der Einschraubbewegung der Dose 20 ein guter Kraftangriffspunkt gegeben.

Figur 4 zeigt eine Explosionsdarstellung des Steckvorrichtungssystems von Figur 3 nach Erreichen der Einbaulage durch die Dose 20. Das Montagegewinde an der Dose 20 sowie das Gegengewinde an der Montageplatte 10 haben in der Einbaulage eine maximale Überdeckung. Die Krafteinleitung ist hierdurch gleichmäßig auf den gesamten Umfang verteilt, was wichtig für einen konstanten und gleichmäßigen Druck auf den unverlierbar am Kragen 12 angeordneten Dichtring (nicht dargestellt) der Montageplatte 10 ist.

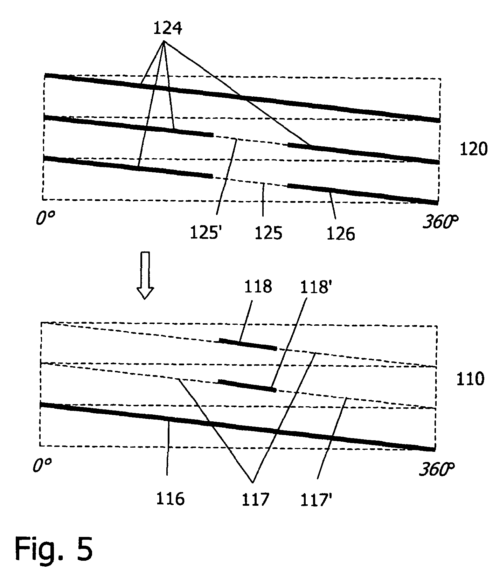

In Figur 5 ist in einer schematischen Darstellung das Zusammenwirken von korrespondierenden Gewindeunterbrechungen dargestellt. Im oberen Teil der Figur ist ein abgewickeltes erstes Gewinde 120, bei dem es sich z.B. um das Montagegewinde handeln kann, und im unteren Teil das hierzu korrespondierende zweite Gewinde 110 (Gegengewinde) dargestellt. Hilfslinien sind dabei gestrichelt und Gewindelinien durchgezogen gezeichnet.

Das Montagegewinde 120 weist eine Gewindelinie auf, welche durch eine Unterbrechung beziehungsweise ein Fehlstück 125 in einen kurzen ersten Abschnitt 126 und einen zweiten Abschnitt 124 unterteilt ist. Der zweite Abschnitt 124 ist darüber hinaus durch ein weiteres Fehlstück 125' unterbrochen, welches gleich lang wie das erste Fehlstück 125 ist und mit diesem axial fluchtet.

Das Gegengewinde 110 ist über die ersten zwei Gewindeumläufe im Wesentlichen komplementär zum Montagegewinde 120 ausgebildet. Mit anderen Worten sind dort, wo das Montagegewinde 120 Fehlstücke 125, 125' hat, Abschnitte 118, 118' des Gegengewindes 110 ausgebildet, und dort, wo Abschnitte 126, 124 des Montagegewindes 120 ausgebildet sind, Fehlstücke 117, 117' des Gegengewindes 110 liegen. Ab dem dritten Gewindeumlauf sind das Montagegewinde 120 und das Gegengewinde 110 durchgehend ausgebildet. Selbstverständlich könnte das Montagegewinde 120 auch mehr als zwei axial fluchtende Fehlstücke 125, 125' bzw. das Gegengewinde 110 mehr als zwei axial fluchtende Abschnitte 116, 116' aufweisen. Insbesondere könnten alle Gewindeumläufe mit Unterbrechungen versehen sein. Die Darstellung von Figur 5 ist daher nur als Beispiel zu verstehen.

Durch axiales Zusammenstecken in Pfeilrichtung können die beiden Gewinde 110, 120 so zusammengefügt werden, dass der erste Abschnitt 126 des Montagegewindes 120 durch die Unterbrechung 117 und gegebenenfalls darüber hinaus auch durch die Unterbrechung 117' in den ersten bzw. zweiten darunter gelegenen Gewindegang des Gegengewindes 110 gelangt. Anschließend können die beiden Gewinde 110, 120 miteinander verschraubt werden. Auch wenn der dabei bis zur Endstellung zurückgelegte Drehwinkel weniger als 360° beträgt, wird durch den "vorauseilenden" ersten Abschnitt 126 erreicht, dass die maximalen überlappungsfreien Gewindeabschnitte kleiner sind als der an einer Volldrehung von 360° noch fehlende Winkel.

Das axiale Zusammenstecken der Gewinde 110, 120 über mehrere Gewindeumläufe (in Figur 5 maximal zwei) hat den Vorteil, dass entsprechend viele Gewindegänge zum Halt beitragen. Ferner können unterschiedlich dicke Zwischenbauteile zwischen dem Steckvorrichtungselement 20 und der Montageplatte 10 untergebracht werden.

## Patentansprüche

1. Steckvorrichtungselement (20) mit einem Montagegewinde zur Verbindung mit einem anderen Bauteil (10),
**dadurch gekennzeichnet, dass** das Montagegewinde (120) mit einem nicht vollständig umlaufenden Abschnitt (26, 126) beginnt, der durch eine Unterbrechung (25, 125) vom nachfolgenden Abschnitt (24, 124) des Montagegewindes getrennt ist.

2. Steckvorrichtungselement nach Anspruch 1, **dadurch gekennzeichnet, dass** das Montagegewinde weitere Unterbrechungen (25', 125') aufweist, die mit der ersten Unterbrechung (25, 125) in axialer Richtung fluchten.

3. Steckvorrichtungssystem enthaltend
a) mindestens ein Steckvorrichtungselement (20) mit einem Montagegewinde (24, 26, 120), sowie
b) eine Montageplatte (10) mit mindestens einer Ausnehmung (19a, 19b) für das Steckvorrichtungselement,
**dadurch gekennzeichnet, dass**
c) die Ausnehmung (19a, 19b) ein zum Montagegewinde korrespondierendes Gegengewinde (16, 18, 110) aufweist,
d) das Montagegewinde (24, 26, 120) und das Gegengewinde (16, 18, 110) durch weniger als eine Vollumdrehung in eine Verbindungsstellung verschraubt werden können, und
e) in der Verbindungsstellung der maximale Winkel, über welchen kein Kontakt zwischen Montagegewinde und Gegengewinde besteht, weniger als der an einer Vollumdrehung fehlende Winkel (α) beträgt.

4. Steckvorrichtungssystem nach Anspruch 3,
**dadurch gekennzeichnet, dass** es ein Steckvorrichtungselement (20) nach Anspruch 1 oder 2 enthält und dass das korrespondierende Gegengewinde (16, 18, 110) mindestens eine Unterbrechung (17a, 117, 117') aufweist.

5. Steckvorrichtungssystem nach Anspruch 3 oder 4,
**dadurch gekennzeichnet, dass** das Montagegewinde und das Gegengewinde mehrgängig ausgebildet sind.

6. Steckvorrichtungssystem nach mindestens einem der Ansprüche 3 bis 5,
**dadurch gekennzeichnet, dass** die Ausnehmungen (19a, 19b) der Montageplatte (10) von einem Kragen (12) umgeben sind, in welchem das korrespondierende Gegengewinde (16, 18) ausgebildet ist.

7. Steckvorrichtungssystem nach mindestens einem der Ansprüche 3 bis 6,
**dadurch gekennzeichnet, dass** es Verriegelungsmittel (13, 22) aufweist zur Blockierung der Verbindungsstellung gegen Verdrehung.

8. Steckvorrichtungssystem nach mindestens einem der Ansprüche 3 bis 7,
**dadurch gekennzeichnet, dass** entlang der Ausnehmung (19a, 19b) der Montageplatte (10) ein unverlierbares Dichtungselement angeordnet ist.
